# EUROPEAN PATENT APPLICATION

(11) **EP 4 759 507 A1**
(43) Date of publication of application: **17.06.2026**
(21) Application number: 24851608.0
(22) Date of filing: 24.07.2024
(51) Int. Cl.: B29C 45/16, B29C 45/26

(54) **METHOD FOR MANUFACTURING IN-MOLD COATED COMPONENT, AND MOLD**

(30) Priority: 09.08.2023 JP 2023130300
(71) Applicant: Panasonic Intellectual Property Management Co., Ltd., Kadoma-shi, Osaka 571-0057 (JP)
(72) Inventor: NAGAHARA, Takayuki, Kadoma-shi, Osaka 571-0057 (JP); GAMO, Hiroki, kadoma-shi, Osaka 571-0057 (JP)
(74) Representative: Novagraaf International SA
(86) International application number: PCT/JP2024/026464
(87) International publication number: WO 2025/033181

(57) **Abstract**

At the time of injecting a coating material, flow resistance increase portion (25) provided in coating material injection flow path (24) increases flow resistance and mixes the coating material.

## Description

### TECHNICAL FIELD

The present invention relates to a method for manufacturing an in-mold coated component and a mold.

### BACKGROUND ART

Conventionally, for the purpose of imparting functionality such as decoration or a hard coat to a resin molded product used for automobiles, home electrical appliance, building materials, or the like, or from the viewpoint of environmental resistance, omitting a coating step or saving power in a coating material drying step, an in-mold coating method has been proposed in which a coating material is injected between a surface of the resin molded product and a mold cavity surface, and then the coating material is cured in a mold to manufacture a molded product in which a coating film is integrally adhered to the surface of the resin molded product. Recently, in Europe and the like, from the viewpoint of environmental resistance, application to interior components or exterior components of the automobiles has started to proceed. In addition, as the coating material used for in-mold coating, a two-liquid reactive coating material such as a polyol and an isocyanate as disclosed in PTL 1 has been used instead of a conventional one-liquid thermosetting type. With an advantageous point of pot life as compared with one-liquid and progress of mixing technique in an injection device, it has become mainstream in the in-mold coating method. Figs. 7 to 8C are diagrams showing a conventional example of an in-mold coating mold described in PTL 2.

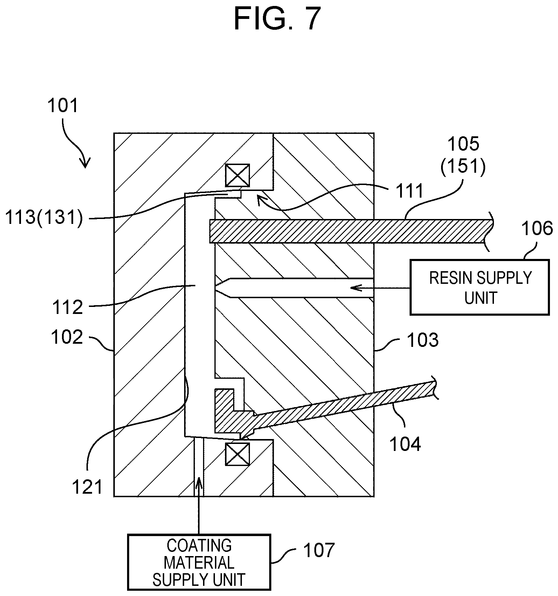

In Figs. 7 to 8C, in-mold coating mold 101 includes two molds, first mold 102 and second mold 103, and first mold 102 and second mold 103 are relatively movable in an opening and closing direction by an opening and closing unit (not shown). First mold 102 and second mold 103 are rubbed by edge portion 111, and cavity 112 for molding resin is formed therein. First mold 102 includes coating surface 121 for applying coating to a surface of the resin molded in cavity 112. Further, in order to provide auxiliary cavity 113 communicating with cavity 112 and extending in the opening and closing direction of mold 101 over an entire circumference of cavity 112, recess 131 is formed in edge portion 111 of second mold 103. Thus, main body 191 and auxiliary molded body 193 of resin molded body 109 are integrally molded.

Resin supply unit 106 for supplying resin into cavity 112 is provided on second mold 103 side. Coating material supply unit 107 for supplying the coating material to cavity 112 is provided on first mold 102 side.

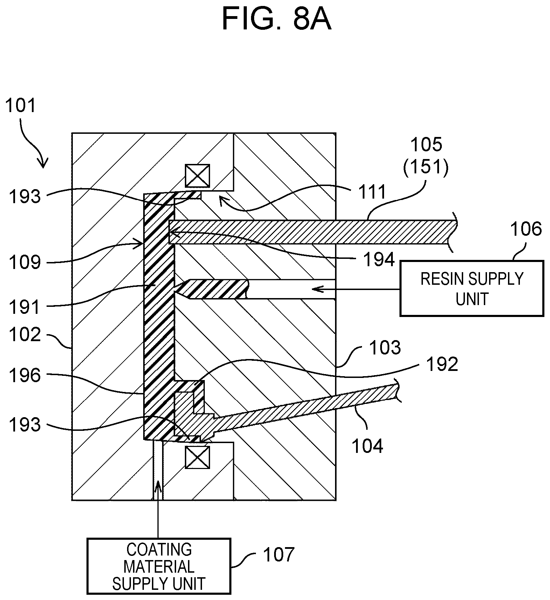

As shown in Fig. 8A, after mold 101 is closed, the resin is supplied into cavity 112 by resin supply unit 106. Cavity 112, auxiliary cavity 113, and undercut portion 192 are filled with the supplied resin. In this state, the resin is cured to form resin molded body 109.

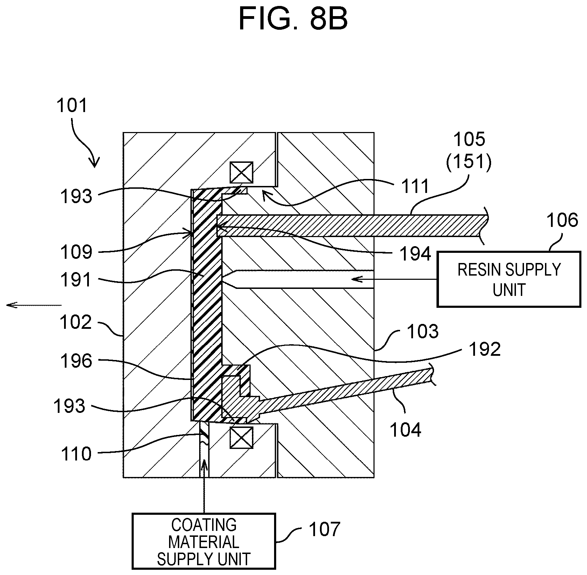

After the resin is cured, as shown in Fig. 8B, first mold 102 and second mold 103 are relatively moved in the opening and closing direction by the opening and closing unit, and a gap for supplying the coating material is provided between a surface of resin molded body 109 (surface 196 to be coated) and a surface of first mold 102. Thereafter, the coating material is supplied to the gap by coating material supply unit 107 to apply coating film 110 to surface 196 to be coated of resin molded body 109.

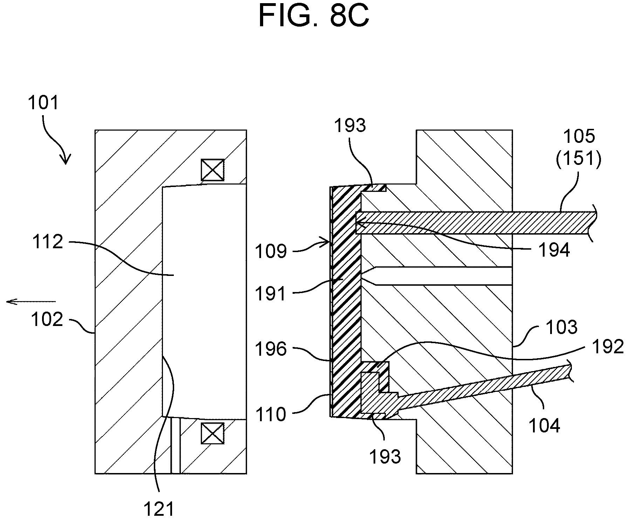

After completion of the coating step, when the coating material is cured, as shown in Fig. 8C, first mold 102 and second mold 103 are relatively moved in the opening and closing direction by the opening and closing unit. In this way, a coating film component having coating film 110 on the surface of resin molded body 109 is obtained.

However, these conventional examples have the following problems. When two or more reactive coating materials are used for color coating, and a mixing state in an injector which is the coating material supply unit is not good, there is a case where appearance defects such as color unevenness occur, and in order to prevent this, a coping unit such as increasing a thickness of the coating film to complement dispersibility of color pigment is used. In an in-mold coating method aimed at reducing coating material loss, there is a large problem when a mixing amount in the injector decreases, such as when it is desired to cope with small components or to thin the coating film. Even when reactive coating materials of two liquids for a transparent functional layer such as a hard coat are mixed, in the case of these small volume coatings, generation of an uncured portion due to mixing unevenness is a problem. As described above, in order to secure superiority in environmental resistance to conventional coating, a technique for improving mixing properties at the time of small amount coating is required.

### Citation List

### Patent Literature

PTL 1: Japanese Patent No. 6871157
PTL 2: Japanese Patent No. 4512005

### SUMMARY OF THE INVENTION

In a conventional configuration described above, when two or more reactive coating materials are used and the mixing state in the injector is not good, appearance quality defects such as color unevenness or mixing unevenness occur on the coating surface. In addition, it is forced, for example, to increase an amount of the coating material used in the case of small components or target components whose coating film thickness is desired to be reduced. There is a demand for improvement proposals for the in-mold coating mold that suppresses the color unevenness and the mixing unevenness even when a small volume of the coating material is used.

The present invention is for solving the above-mentioned conventional problems, and an object of the present invention is to provide a method for manufacturing an in-mold coated component and a mold which suppress the color unevenness and the mixing unevenness even when a small volume (for example, 1 cc to 30 cc) of the coating material is used.

In order to achieve the above object, a method for manufacturing an in-mold coated component according to one aspect of the present invention is a method for manufacturing an in-mold coated component, the method including: injecting a reactive coating material of two or more liquids into a coating film cavity formed between a surface of a mold and a surface of a resin molded body via a coating material injection flow path in an in-mold coated component mold; and then curing the coating material in the mold to manufacture an in-mold coated component having a coating film formed on the surface of the resin molded body, in which the coating material is mixed by increasing flow resistance by a flow resistance increase portion provided in the coating material injection flow path at the time of injecting the coating material.

The in-mold coated component mold according to another aspect of the present invention is an in-mold coated component mold for manufacturing an in-mold coated component having a coating film formed on a surface of a resin molded body by injecting a reactive coating material of two or more liquids into a coating film cavity adjacent to the surface of the resin molded body via a coating material injection flow path and then curing the coating material, the in-mold coated component mold including, in the coating material injection flow path, a flow resistance increase portion that comes into contact with the coating material in a direction intersecting an injection direction of the coating material at the time of injecting the coating material to increase flow resistance of the coating material and mix the coating material.

As described above, according to the method for manufacturing the in-mold coated component and the mold according to the aspects of the present invention, it is possible to provide an in-mold coated component in which the color unevenness and the mixing unevenness are suppressed even when a small volume of the coating material is used, when injecting the reactive coating material of two or more liquids into the coating film cavity formed between the surface of the mold and the surface of the resin molded body via the coating material injection flow path in the in-mold coated component mold, and then curing the coating material in the mold to manufacture the in-mold coated component having the coating film formed on the surface of the resin molded body.

### BRIEF DESCRIPTION OF THE DRAWINGS

Fig. 1A is a plan view of a mold of an in-mold coated component, showing steps of a method for manufacturing the in-mold coated component according to a first exemplary embodiment of the present invention.
Fig. 1B is a sectional view of the mold of the in-mold coated component, showing the steps of the method for manufacturing the in-mold coated component according to the first exemplary embodiment of the present invention.
Fig. 1C is a plan view of the mold of the in-mold coated component, showing the steps of the method for manufacturing the in-mold coated component according to the first exemplary embodiment of the present invention.
Fig. 1D is a sectional view of the mold of the in-mold coated component, showing the steps of the method for manufacturing the in-mold coated component according to the first exemplary embodiment of the present invention.
Fig. 2A is a sectional view for explaining an operation of the method for manufacturing the in-mold coated component according to the first exemplary embodiment of the present invention.
Fig. 2B is a sectional view for explaining the operation of the method for manufacturing the in-mold coated component according to the first exemplary embodiment of the present invention.
Fig. 2C is a sectional view for explaining the operation of the method for manufacturing the in-mold coated component according to the first exemplary embodiment of the present invention.
Fig. 2D is a sectional view for explaining the operation of the method for manufacturing the in-mold coated component according to the first exemplary embodiment of the present invention.
Fig. 2E is a sectional view for explaining the operation of the method for manufacturing the in-mold coated component according to the first exemplary embodiment of the present invention.
Fig. 2F is a sectional view for explaining the operation of the method for manufacturing the in-mold coated component according to the first exemplary embodiment of the present invention.
Fig. 2G is a sectional view for explaining the in-mold coated component according to the first exemplary embodiment of the present invention.
Fig. 3A is a plan view of the mold, showing the steps of the method for manufacturing the in-mold coated component according to a second exemplary embodiment of the present invention.
Fig. 3B is a sectional view of the mold, showing the steps of the method for manufacturing the in-mold coated component according to a second exemplary embodiment of the present invention.
Fig. 3C is a plan view of the mold, showing the steps of the method for manufacturing the in-mold coated component according to a second exemplary embodiment of the present invention.
Fig. 3D is a sectional view of the mold, showing the steps of the method for manufacturing the in-mold coated component according to a second exemplary embodiment of the present invention.
Fig. 4A is an explanatory diagram showing an example of a flow resistance increase portion of the mold according to a third exemplary embodiment of the present invention.
Fig. 4B is an explanatory diagram showing another example of the flow resistance increase portion of the mold according to the third exemplary embodiment of the present invention.
Fig. 4C is an explanatory diagram showing still another example of the flow resistance increase portion of the mold according to the third exemplary embodiment of the present invention.
Fig. 5A is a plan view of the mold, showing a resin molding step of the method for manufacturing the in-mold coated component according to a fourth exemplary embodiment of the present invention.
Fig. 5B is a sectional view of the mold, showing the resin molding step of the method for manufacturing the in-mold coated component according to the fourth exemplary embodiment of the present invention.
Fig. 5C is a plan view of the mold, showing an in-mold coating step of the method for manufacturing the in-mold coated component according to the fourth exemplary embodiment of the present invention.
Fig. 5D is a sectional view of the mold, showing the in-mold coating step of the method for manufacturing the in-mold coated component according to the fourth exemplary embodiment of the present invention.
Fig. 6A is a plan view of the mold used in the method for manufacturing the in-mold coated component according to a fifth exemplary embodiment of the present invention.
Fig. 6B is a sectional view of the mold used in the method for manufacturing the in-mold coated component according to the fifth exemplary embodiment of the present invention.
Fig. 6C is a plan view of the mold used in the method for manufacturing the in-mold coated component according to the fifth exemplary embodiment of the present invention.
Fig. 6D is a sectional view of the mold used in the method for manufacturing the in-mold coated component according to the fifth exemplary embodiment of the present invention.
Fig. 7 is a sectional view of an in-mold coating mold according to a conventional exemplary embodiment described in PTL 2.
Fig. 8A is a sectional view for explaining an operation of the in-mold coating mold according to the conventional exemplary embodiment described in PTL 2.
Fig. 8B is a sectional view for explaining the operation of the in-mold coating mold according to the conventional exemplary embodiment described in PTL 2.
Fig. 8C is a sectional view for explaining the operation of the in-mold coating mold according to the conventional exemplary embodiment described in PTL 2.

### DESCRIPTION OF EMBODIMENTS

### (First exemplary embodiment)

Hereinafter, exemplary embodiments of the present disclosure will be described with reference to the drawings.

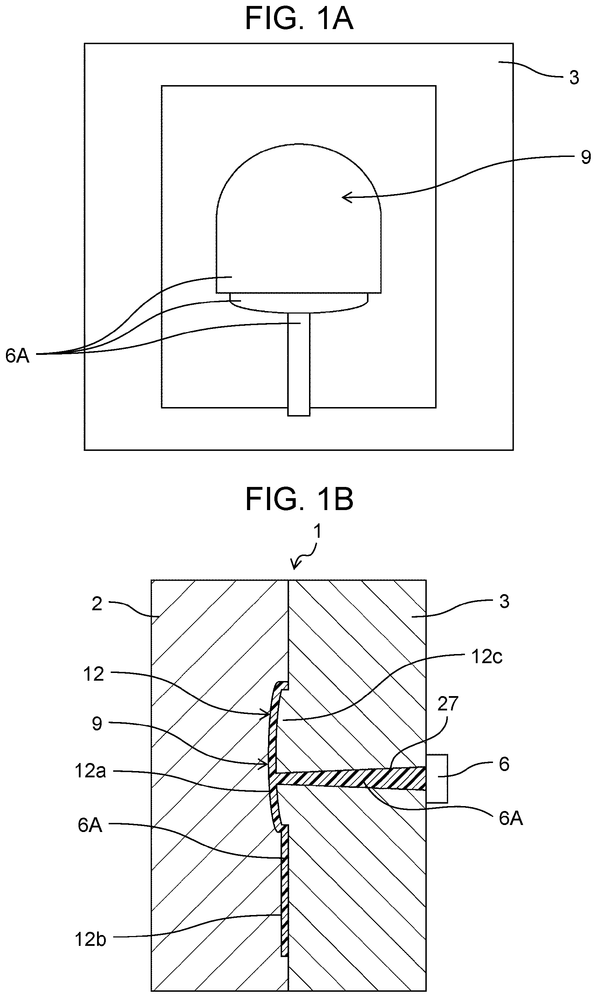

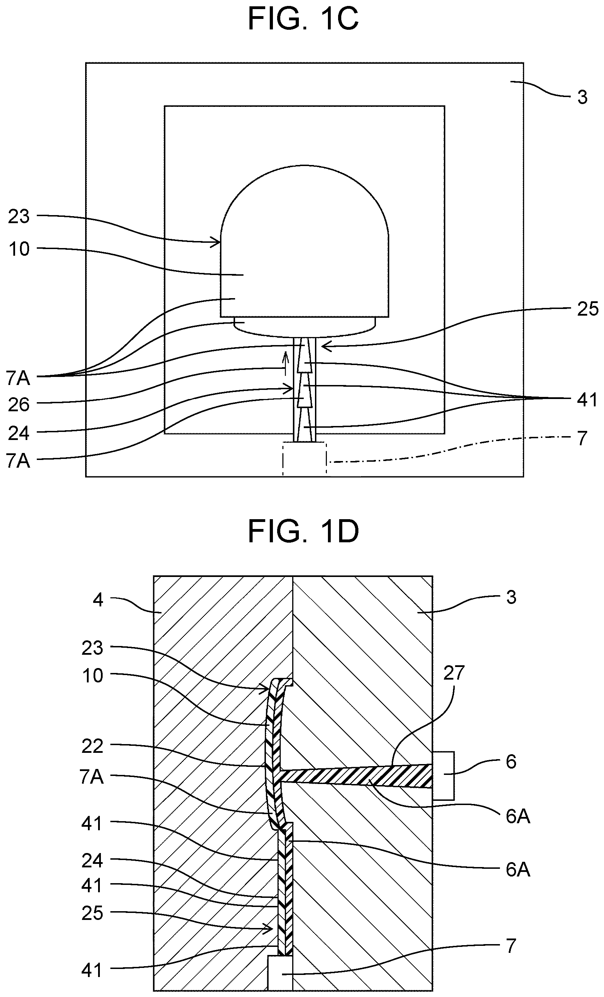

Figs. 1A to 1D are an example of a method for manufacturing an in-mold coated component according to a first exemplary embodiment and mold 1 of an in-mold coated component used in the method. As an example, this in-mold coated component 23 shows a molded component imaging a home electrical appliance housing cover or the like. Figs. 1A and 1C are plan views of resin molded body 9 for the in-mold coated component or in-mold coated component 23 and the mold, and Figs. 1B and 1D are sectional views of resin molded body 9 or in-mold coated component 23 and the mold.

Mold 1 of the in-mold coated component includes first mold 2, second mold 3, and third mold 4, and in first mold 2, second mold 3, and third mold 4, by an opening and closing unit and a movement unit (not shown), first mold 2 and third mold 4 are freely replaced, first mold 2 and second mold 3 are relatively freely moved in the opening and closing direction, and third mold 4 and second mold 3 are relatively freely moved in the opening and closing direction. Thus, resin molded body 9 can be molded by first mold 2 and second mold 3, and coating film 10 can be further formed on a surface of resin molded body 9 by third mold 4 and second mold 3 to mold in-mold coated component 23. Note that when in-mold coated component 23 means only a product portion, the in-mold coated component may include a portion molded by coating material injection flow path 24 or the like in addition to the product portion.

First mold 2 has, as cavity 12, resin molded body recess 12a that is the product portion and coating material injection flow path forming recess 12b communicating with resin molded body recess 12a, on a mating surface.

Second mold 3 has, as cavity 12, protrusion 12c facing resin molded body recess 12a that is the product portion and resin injection flow path 27 communicating with cavity 12.

When first mold 2 and second mold 3 are combined, resin molded body cavity 12 that is configured by recess 12a and protrusion 12c to mold resin molded body 9 is formed therein.

Second mold 3 is provided with resin supply unit 6, and is configured to obtain resin molded body 9 as a molded product by injecting a resin into cavity 12 through resin injection flow path 27 from an injection molding machine or the like (not shown) at the time of combination with first mold 2.

Third mold 4 includes coating film cavity 22 for forming coating film 10 for applying coating to the surface of resin molded body 9 molded in cavity 12, and coating material injection flow path 24 communicating with cavity 22 along coating material injection flow path forming recess 12b. Coating film cavity 22 is formed between a surface of the third mold 4 and the surface of resin molded body 9, and is provided to be adjacent to the surface of resin molded body 9. In addition, third mold 4 is provided with coating material supply unit 7 (In Fig. 1C, an arrangement corresponding portion is indicated by a one-dot chain line.), and is configured to obtain coating film 10 on a surface on a coating surface side of resin molded body 9 by mixing and injecting reactive coating material 7A of two or more liquids into cavity 22 through coating material injection flow path 24 from a coating material injector or the like (not shown) as an example of coating material supply unit 7 at the time of combination with second mold 3. Note that cavity 22 is not limited to being provided in advance in third mold 4 as described above, and a space corresponding to cavity 22 may be formed by moving first mold 2 slightly away from second mold 3 after resin molding.

In third mold 4, flow resistance increase portion 25 is provided in coating material injection flow path 24 between coating material supply unit 7 and coating film 10 of resin molded body 9.

Flow resistance increase portion 25 increases flow resistance and promotes mixing, for example, by contacting coating material 7A in a direction intersecting injection direction 26 of coating material 7A and generating turbulence in coating material 7A. Here, specifically, flow resistance increase portion 25 is configured by connecting a plurality of, for example, three trapezoidal or tapered mixing flow paths 41 which expand planarly in a lateral direction and taper from a wide upstream side toward a narrow downstream side in injection direction 26 of coating material 7A. According to such a configuration, when coating material 7A flows from the upstream side to the downstream side in trapezoidal mixing flow paths 41, for example, a flow path area on an upstream end side of second mixing flow path 41 following most upstream mixing flow path 41 is suddenly larger than the flow path area on the downstream end side of most upstream mixing flow path 41. Therefore, on the upstream end side of second mixing flow path 41, for example, pressure is reduced to generate the turbulence, and the flow resistance is increased to forcibly promote the mixing of coating material 7A.

Therefore, since the plurality of mixing flow paths 41 are provided in coating material injection flow path 24, when coating material 7A flowing into coating material injection flow path 24 from coating material supply unit 7 passes through mixing flow paths 41 in coating material injection flow path 24, coating material 7A can reach cavity 12 of the product portion in a state where a mixing effect of coating material 7A is promoted by a flow path shape or the flow resistance. Even when the mixing properties in the injector are not good, the mixing of reactive coating material 7A of two or more liquids is promoted in mold 1 by mixing flow paths 41, and it is possible to provide in-mold coated component 23 having coating film 10 without the color unevenness and the mixing unevenness or with suppressed color unevenness and mixing unevenness even when a small volume of the coating material is used. It is desirable that a cured molded portion of mixing flow path 41 is removed by cutting or the like, or is provided at a portion that is not a product appearance surface, when molding of in-mold coated component 23 is completed.

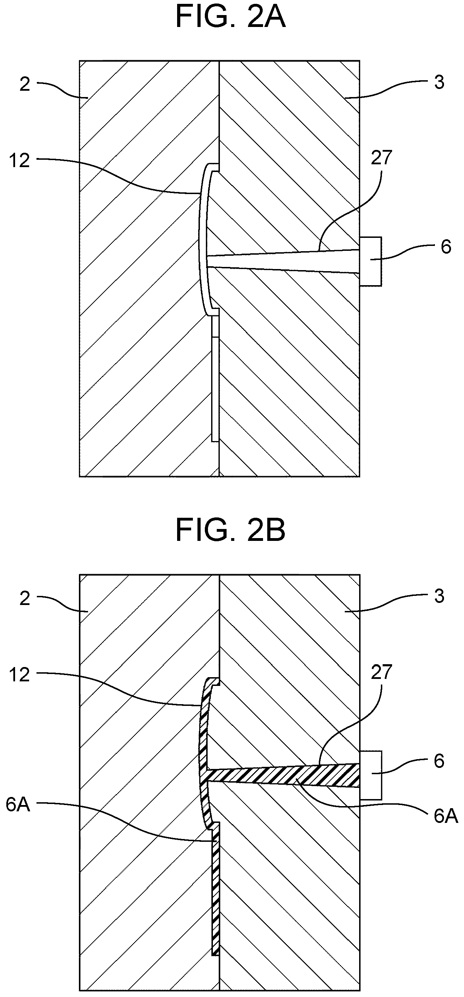

Next, an operation in each step of the method for manufacturing in-mold coated component 23 according to the first exemplary embodiment of the present invention will be described with reference to Figs. 2A to 2G.

First, in a sectional view of Fig. 2A, first mold 2 and second mold 3 are combined and clamped, and then as shown in Fig. 2B, resin 6A is supplied into resin molded body cavity 12 through resin injection flow path 27 by resin supply unit 6 of second mold 3.

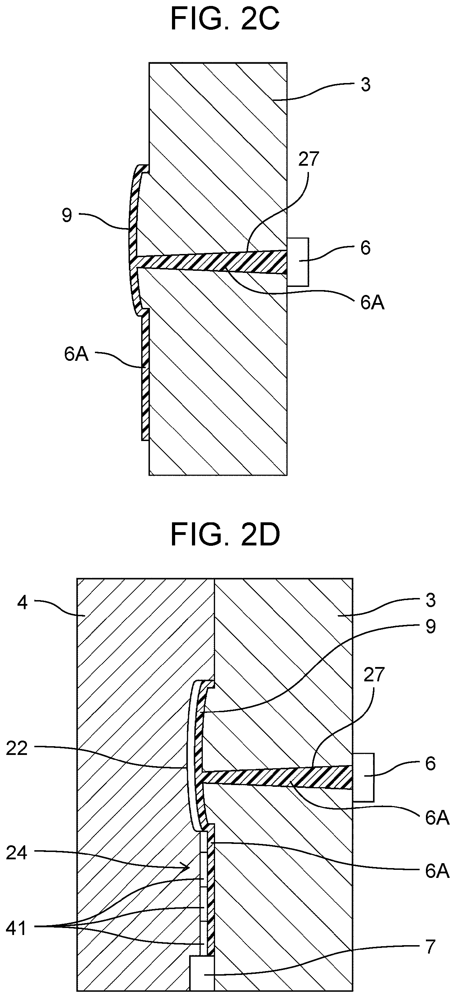

Subsequently, resin 6A supplied to resin molded body cavity 12 in Fig. 2C is cured to form resin molded body 9, and then first mold 2 and second mold 3 are opened, and resin molded body 9 is left in second mold 3.

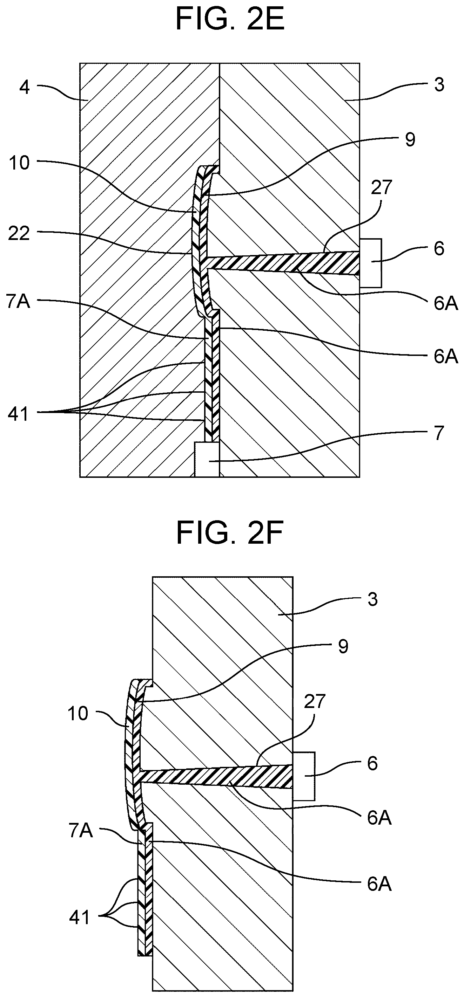

Subsequently, second mold 3 and third mold 4 are combined and clamped using the movement unit (not shown in Fig. 2D), and then coating material 7A is injected into coating film cavity 22 through mixing flow path 41 of coating material injection flow path 24 of third mold 4 by the injector in which reactive coating material 7A of two or more liquids is mixed, that is coating material supply unit 7 of Fig. 2E.

At this time, when coating material 7A flows from the upstream side to the downstream side in trapezoidal three mixing flow paths 41, for example, the flow path area on the upstream end side of second mixing flow path 41 following most upstream mixing flow path 41 is suddenly larger than the flow path area on the downstream end side of most upstream mixing flow path 41. Therefore, on the upstream end side of second mixing flow path 41, for example, pressure is reduced to generate the turbulence, and the flow resistance is increased to forcibly promote the mixing of coating material 7A. Subsequently, the flow path area of coating material 7A on the upstream end side of third mixing flow path 41 following second mixing flow path 41 is suddenly larger than the flow path area on the downstream end side of second mixing flow path 41. Therefore, on the upstream end side of third mixing flow path 41, for example, the pressure is reduced to generate the turbulence, and the flow resistance is increased to forcibly promote the mixing of coating material 7A. In this way, it is possible to inject reactive coating material 7A of two or more liquids into coating film cavity 22 while sufficiently mixing reactive coating material 7A of two or more liquids in coating material injection flow path 24.

Subsequently, when second mold 3 and third mold 4 are opened after coating material 7A is cured in Fig. 2F, in-mold coated component 23 in which coating film 10 is applied to resin molded body 9 is obtained.

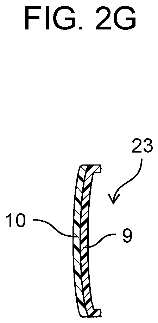

Subsequently, as shown in Fig. 2G, when a portion other than the product portion is removed by a step such as cutting, in-mold coated component 23 including only the product portion is obtained. A coating film 10 is formed in close contact with and integrated with the surface of resin molded body 9.

As a material of resin 6A to be molded, a general-purpose injection-molded resin such as a PC resin, a PC/ABS resin, or an ABS resin may be used, and an extrusion molded product or the like can be inserted into the mold without injection molding to provide the coating film.

As coating material 7A to be used, the reactive coating material of two or more liquids such as a polyol and an isocyanate, or a system of three or more liquids used by mixing a color coating material with the coating material may be used.

As described above, according to the method for manufacturing the in-mold coated component and the mold according to the first exemplary embodiment, since the plurality of mixing flow paths 41 are provided in coating material injection flow path 24 as an example of flow resistance increase portion 25, when coating material 7A flowing into coating material injection flow path 24 from coating material supply unit 7 passes through the plurality of mixing flow paths 41 in coating material injection flow path 24, coating material 7A can reach coating film cavity 22 in a state where the mixing effect of coating material 7A is promoted by the flow path shape or the flow resistance. Even when the mixing properties in the injector are not good, the mixing of reactive coating material 7A of two or more liquids is promoted in mold 1 by these mixing flow paths 41, and it is possible to provide in-mold coated component 23 having coating film 10 without the color unevenness and the mixing unevenness or with suppressed color unevenness and mixing unevenness even when a small volume of the coating material is used.

### (Second exemplary embodiment)

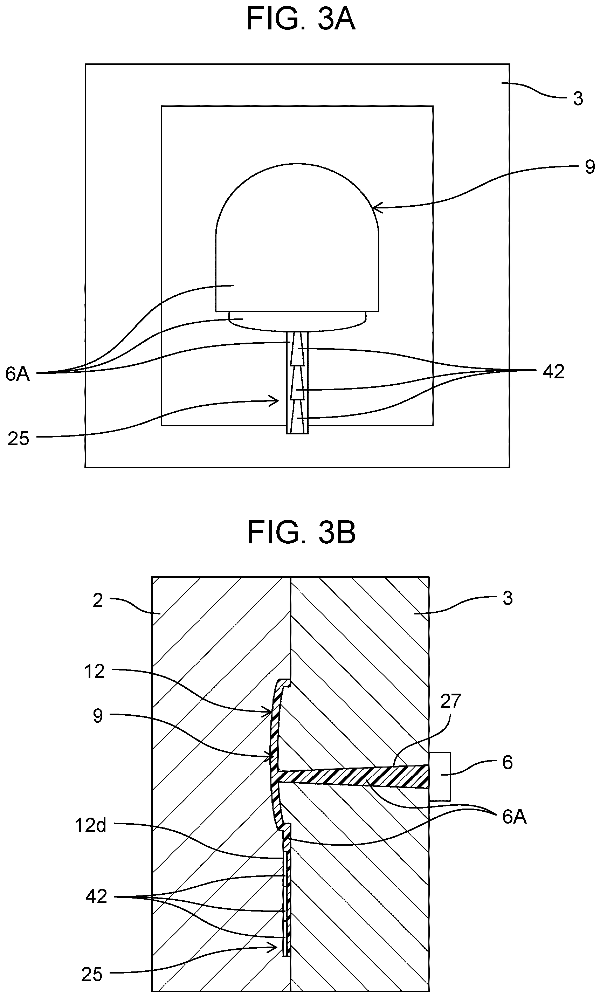

Figs. 3A to 3D are plan views and sectional views for explaining an example of the mold used in the method for manufacturing the in-mold coated component according to a second exemplary embodiment of the present invention. In Figs. 3A to 3D, the same components as those in Figs. 1A to 2G are denoted by the same reference marks, and description thereof will be omitted.

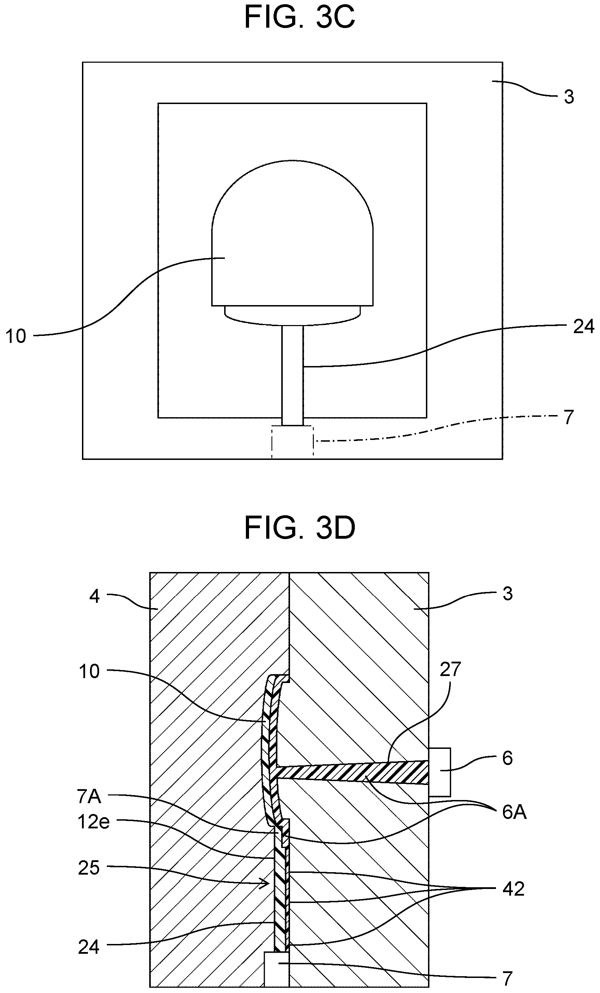

Figs. 3A to 3D are an example of the mold, showing steps of the method for manufacturing the in-mold coated component according to the second exemplary embodiment. In the method for manufacturing the in-mold coated component and the mold, a molded component imaging the home electrical appliance housing cover or the like is shown as an example of the in-mold coated component. Figs. 3A and 3C are plan views of the mold, showing the steps of the method for manufacturing the in-mold coated component, and Figs. 3B and 3D are sectional views of the mold, showing the steps of the method for manufacturing the in-mold coated component.

The second exemplary embodiment is different from the first exemplary embodiment in that, instead of forming mixing flow path 41 as the example of flow resistance increase portion 25 in third mold 4, as another example of flow resistance increase portion 25, mixing flow path portion 42 made of resin 6A is molded by first mold 2, and then mixing flow path portion 42 functions as mixing flow path 41 at the time of injecting coating material 7A. That is, first mold 2 has cavity 12d for molding mixing flow path portion 42 made of resin 6A, and third mold 4 has cavity 12e into which molded mixing flow path portion 42 made of resin 6A is inserted to form coating material injection flow path 24.

With this configuration, when coating material 7A flowing in from coating material supply unit 7 passes through coating material injection flow path 24, coating material 7A can reach cavity 22 of coating film 10 in a state where the mixing effect is promoted by the flow path shape or the flow resistance formed in mixing flow path portion 42 as with mixing flow path 41. Even when the mixing properties in the injector are not good, the mixing of reactive coating material 7A of two or more liquids is promoted in mold 1 by mixing flow path portion 42, and it is possible to provide in-mold coated component 23 having coating film 10 without the color unevenness and the mixing unevenness or with suppressed color unevenness and mixing unevenness.

### (Example of flow resistance increase portion 25)

Here, various configurations of flow resistance increase portion 25 in the first and second exemplary embodiments will be exemplified. These examples are also applicable to third and fourth exemplary embodiments described later.

Flow resistance increase portion 25 increases the flow resistance and promotes the mixing, for example, by contacting coating material 7A in a direction intersecting injection direction 26 of coating material 7A and generating the turbulence in coating material 7A at the time of injecting the coating material in coating material injection flow path 24.

A sectional shape intersecting (for example, orthogonal to) flow start direction f1, in other words, injection direction 26 of coating material injection flow path 24 including flow resistance increase portion 25 can be quadrangle, rectangle, square, triangle, polygon, or triangle, quadrangle, or polygon having an R-shaped corner, circle, ellipse, semicircle, or the like.

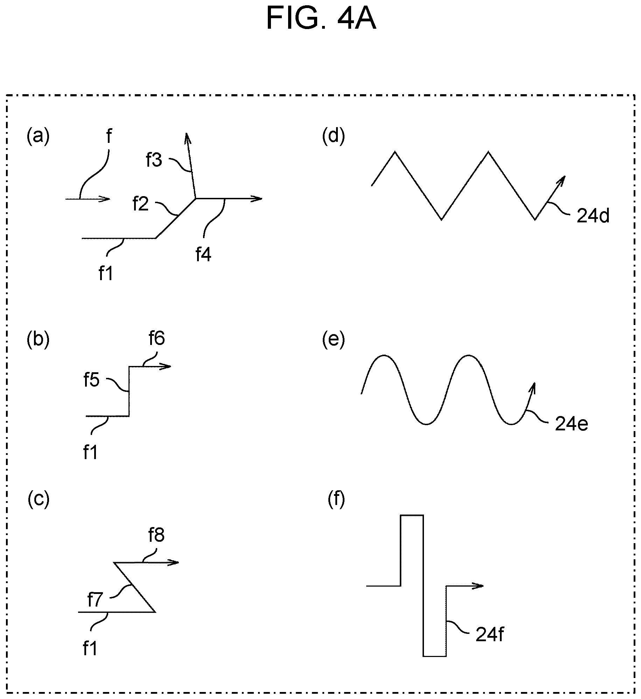

As an example of flow resistance increase portion 25, Fig. 4A shows a case of both side walls of coating material injection flow path 24 when a direction of coating material injection flow path 24 changes with respect to flow start direction f1, in other words, injection direction 26 of coating material injection flow path 24. In this example, there is no change in flow path sectional area.

In (a) of Fig. 4A, coating material injection flow path 24 can be a flow path that is bent once in direction f2 at an angle of 45 degrees with respect to flow start direction f1, and then bent by 90 degrees in direction f3 with respect to flow start direction f1, or bent by 135 degrees in direction f4 with respect to flow start direction f1.

In (b) of Fig. 4A, coating material injection flow path 24 can be a flow path that is bent once in direction f5 at an angle of 90 degrees with respect to flow start direction f1 and then further bent by 90 degrees in direction f6 as in flow start direction f1.

In (c) of Fig. 4A, coating material injection flow path 24 can be an inverted Z-shaped flow path that is bent slightly back in direction of f7 at an angle of 60 degrees with respect to flow start direction f1 and then further bent in direction of f8 by 90 degrees as in flow start direction f1.

In (d) of Fig. 4A, coating material injection flow path 24 can be W-shaped flow path 24d that meanders in a linear zigzag shape with respect to flow start direction f1. In this case, it is preferable to meander twice or more.

In (e) of Fig. 4A, coating material injection flow path 24 can be flow path 24e that meanders in a curved zigzag shape with respect to flow start direction f1. In this case, it is preferable to meander twice or more.

In (f) of Fig. 4A, coating material injection flow path 24 can be flow path 24f that meanders in a reverse S-shape that meanders in a zigzag shape while drawing a U-shape with respect to flow start direction f1. In this case, it is preferable to meander twice or more.

As a result of such a configuration, the both side walls of each of coating material injection flow paths 24 function as an example of flow resistance increase portion 25, and coating material 7A and the both side walls come into contact with each other in a direction intersecting injection direction 26 of coating material 7A at the time of injecting the coating material to generate the turbulence in coating material 7A, or the like, thereby increasing the flow resistance and promoting the mixing.

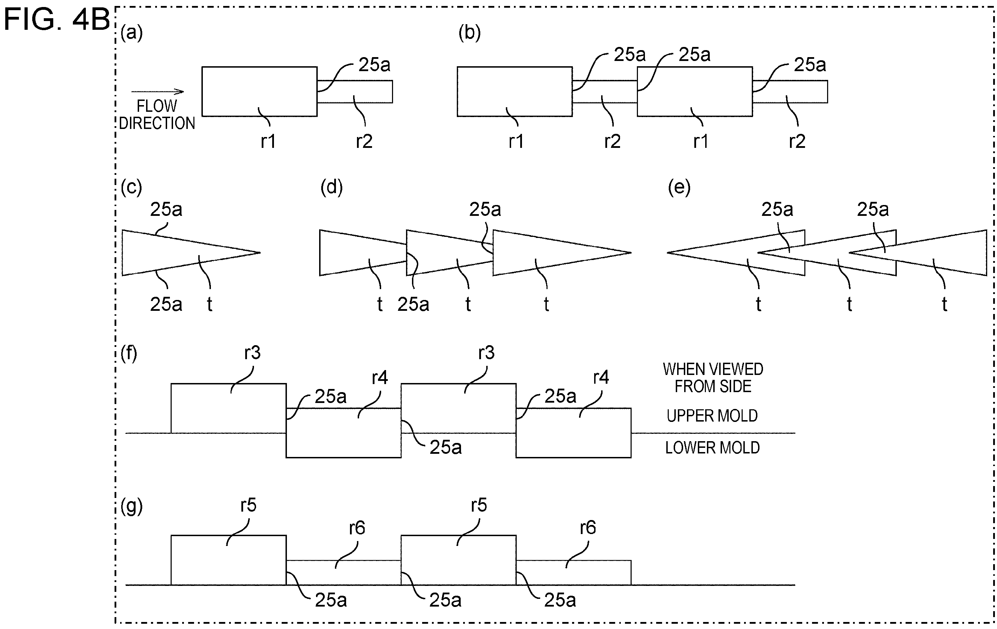

As another example of flow resistance increase portion 25, Fig. 4B shows a case where the flow resistance is increased when proceeding in a flow direction of coating material injection flow path 24, for example, by the turbulence being generated due to pressure reduction caused by a sudden large change in flow path sectional area at area change portion 25a, or for example, by the turbulence being generated due to a collision between coating material 7A and a downstream end wall (that is, an end wall at a downstream end of an upstream flow path) of a connection portion that undergoes an area change.

In (a) of Fig. 4B, coating material injection flow path 24 can be a flow path in which one large rectangular flow path r1 and one small rectangular flow path r2 smaller than flow path r1 are alternately arranged and connected to each other with their center lines aligned in the flow direction when viewed from above or from the side. Here, a connection portion between large rectangular flow path r1 and small rectangular flow path r2 is area change portion 25a, and coating material 7A collides with the end wall on the downstream end side of large rectangular flow path r1 of the connection portion, thereby increasing the flow resistance.

In (b) of Fig. 4B, coating material injection flow path 24 can be a flow path in which one large rectangular flow path r1 and one small rectangular flow path r2 smaller than flow path r1 are alternately arranged and connected to each other with their center lines aligned in the flow direction when viewed from above or from the side, that is, a flow path in which a plurality of combinations of (a) of Fig. 4B are arranged. Here, each of connection portions between large rectangular flow paths r1 and small rectangular flow paths r2 is area change portion 25a, and coating material 7A collides with the end wall on the downstream end side of large rectangular flow path r1 of each connection portion, thereby increasing the flow resistance. In addition, in area change portion 25a which is a connection portion where small rectangular flow path r2 is connected to large rectangular flow path r1, when coating material 7A flows into the upstream end side of large rectangular flow path r1 on the adjacent downstream side from small rectangular flow path r2 on the upstream side, since the flow path sectional area rapidly increases, the pressure is reduced, and the flow resistance is increased.

In (c) of Fig. 4B, coating material injection flow path 24 can be one triangular flow path t that tapers in the flow direction when viewed from above or from the side. Here, both side walls of triangular flow path t are area change portions 25a, and coating material 7A collides with both side walls having a tapered shape of triangular flow path t, thereby increasing the flow resistance.

In (d) of Fig. 4B, coating material injection flow path 24 can be a flow path in which a plurality of triangular flow paths t, which taper in the flow direction when viewed from above or from the side, are arranged and connected such that a downstream end portion and an upstream end portion overlap each other with their center lines aligned in the flow direction. Here, the both side walls of triangular flow path t and a connection portion of adjacent triangular flow paths t are respectively area change portions 25a. That is, coating material 7A collides with area change portions 25a which are the both side walls having a tapered shape of triangular flow path t, thereby increasing the flow resistance. In addition, in area change portion 25a which is a connection portion where two adjacent triangular flow paths t are connected, when coating material 7A flows into the upstream end side of adjacent downstream triangular flow path t from upstream triangular flow path t, since the flow path sectional area rapidly increases, the pressure is reduced, and the flow resistance is increased.

In (e) of Fig. 4B, coating material injection flow path 24 can be a flow path in which the upstream side and the downstream side of the flow path in (d) of Fig. 4B are arranged reversed with respect to the flow direction. Here, each of connection portions between adjacent triangular flow paths t is area change portion 25a, and coating material 7A collides with the end wall on the downstream end side of upstream flow path t of each connecting portion, thereby increasing the flow resistance.

In (f) of Fig. 4B, when two molds 3 and 4 of mold 1 are divided into an upper mold and a lower mold as viewed from the side, coating material injection flow path 24 can be a flow path in which rectangular flow path r3 having a cavity only in the upper mold and rectangular flow path r4 having a cavity both in the upper mold and the lower mold are alternately arranged and connected to each other. Here, connection portions between rectangular flow path r3 and rectangular flow path r4 are area change portions 25a, and coating material 7A collides with the end wall on the downstream end side of upstream rectangular flow path r3 or r4 of each connection portion, thereby increasing the flow resistance. Note that when the coating material injection flow path is formed in the lower mold (for example, second mold 3) as in this configuration, for example, in Fig. 1B, it is necessary to form a coating material injection flow path forming recess for the lower mold side of rectangular flow path r4 in advance in a portion facing coating material injection flow path forming recess 12b of the upper mold (for example, first mold 2) so that the molded resin does not flow into the latter recess.

In (g) of Fig. 4B, by configuring the coating material injection flow path only by the upper mold side of the flow path in (f) of Fig. 4B, as in (b) of Fig. 4B, it is possible to form a flow path in which one large rectangular flow path r5 and one small rectangular flow path r6 smaller than flow path r5 are alternately arranged and connected to each other. Here, connection portions between large rectangular flow path r5 and small rectangular flow path r6 are area change portions 25a, and coating material 7A collides with the end wall on the downstream end side of large rectangular flow path r5 of each connection portion, thereby increasing the flow resistance. In addition, in area change portion 25a which is a connection portion where small rectangular flow path r6 is connected to large rectangular flow path r5, when coating material 7A flows into the upstream end side of large rectangular flow path r5 on the adjacent downstream side from small rectangular flow path r6 on the upstream side, since the flow path sectional area rapidly increases, the pressure is reduced, and the flow resistance is increased.

As a result of such a configuration, area change portion 25a when each of flow path sectional areas changes functions as another example of flow resistance increase portion 25, and coating material 7A and the both side walls come into contact with each other in the direction intersecting injection direction 26 of coating material 7A at the time of injecting the coating material to generate the turbulence in coating material 7A, or the like, thereby increasing the flow resistance and promoting the mixing.

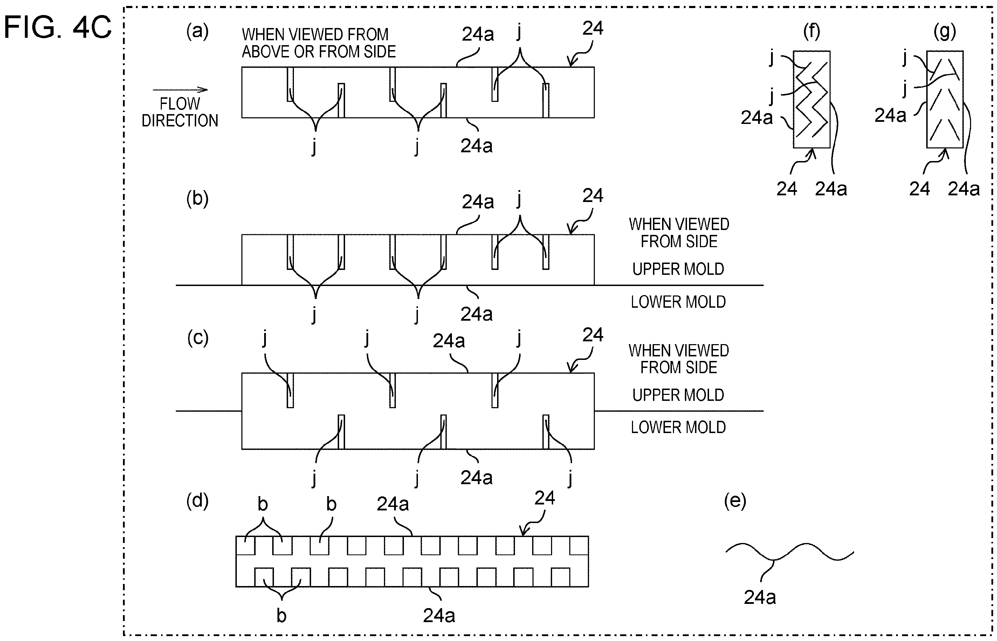

As still another example of flow resistance increase portion 25, Fig. 4C shows a case where baffle plate portions protruding from the side walls in a direction intersecting with the flow direction of coating material injection flow path 24, for example, in a direction orthogonal to the flow direction are arranged at intervals in the flow direction, and the flow resistance is increased, for example, due to generation of the turbulence when coating material 7A collides with the baffle plate portions. Note that the baffle plate portion may be formed by being cut out from the mold, or may be formed in the mold by welding or insertion.

In (a) of Fig. 4C, when viewed from above or from the side, baffle plate portions j alternately protruding from one side wall 24a to near the other side wall 24a facing each other in a direction orthogonal to the flow direction of coating material injection flow path 24 on both side walls 24a facing each other of coating material injection flow path 24 are arranged at intervals in the flow direction. Here, baffle plate portions j function as flow resistance increase portion 25, and coating material 7A collides with each baffle plate portion j to increase the flow resistance.

In (b) of Fig. 4C, when two molds 3 and 4 of mold 1 are divided into the upper mold and the lower mold as viewed from the side, in coating material injection flow path 24, baffle plate portions j alternately protruding to near a mold mating surface in a lower direction orthogonal to the flow direction of coating material injection flow path 24 on side wall 24a that is an upper surface in only the upper mold are arranged at intervals in the flow direction. Here, baffle plate portions j function as flow resistance increase portion 25, and coating material 7A collides with each baffle plate portion j to increase the flow resistance. Note that a linear flow path is secured near the mold mating surface of each baffle plate portion j, so that an injection pressure of coating material 7A easily reaches cavity 12 of the product portion.

In (c) of Fig. 4C, when two molds 3 and 4 of mold 1 are divided into the upper mold and the lower mold as viewed from the side, in coating material injection flow path 24, baffle plate portions j alternately protruding to near the mold mating surface in an up and down direction orthogonal to the flow direction of coating material injection flow path 24 on side wall 24a that is an upper surface of the upper mold and side wall 24a that is a lower surface of the lower mold are arranged at intervals in the flow direction. Here, baffle plate portions j function as flow resistance increase portion 25, and coating material 7A collides with each baffle plate portion j to increase the flow resistance. Note that a linear flow path is secured near the mold mating surface of each baffle plate portion j, so that an injection pressure of coating material 7A easily reaches cavity 12 of the product portion. Note that when the coating material injection flow path is formed in the lower mold (for example, second mold 3) as in this configuration, for example, in Fig. 1B, it is necessary to form a coating material injection flow path forming recess for the lower mold side of coating material injection flow path 24 in advance in a portion facing coating material injection flow path forming recess 12b of the upper mold (for example, first mold 2) so that the molded resin does not flow into the latter recess.

In (d) of Fig. 4C, when viewed from above or from the side, quadrangular prism-shaped baffle plate portions b alternately protruding from side walls 24a to near a center of coating material injection flow path 24 in a direction orthogonal to the flow direction of coating material injection flow path 24 on both side walls 24a facing each other of coating material injection flow path 24 are arranged at intervals in the flow direction to form irregularities on the side walls. Here, baffle plate portion b functions as flow resistance increase portion 25, and coating material 7A collides with each baffle plate portion b to increase the flow resistance. Note that the linear flow path is secured near the center of coating material injection flow path 24 of each baffle plate portion b, so that the injection pressure of coating material 7A easily reaches cavity 12 of the product portion.

As shown in (e) of Fig. 4C, each side wall 24a of each coating material injection flow path 24 is not limited to a flat wall, and as a curved surface of curved irregularities, coating material 7A may collide with the curved surface of the irregularities to increase flow resistance.

As shown in (f) of Fig. 4C, baffle plate portions j may be disposed in a zigzag shape in each coating material injection flow path 24 to obtain the same effect as that of (d) of Fig. 4A.

As shown in (g) of Fig. 4C, baffle plate portions j may be disposed in a substantially inverted-V shape in each coating material injection flow path 24 to obtain the same effect as that of (d) of Fig. 4B.

As a result of such a configuration, each baffle plate portion j or baffle plate portion b functions as still another example of flow resistance increase portion 25, and coating material 7A and baffle plate portion j or baffle plate portion b come into contact with each other in the direction intersecting injection direction 26 of coating material 7A at the time of injecting the coating material to generate the turbulence in coating material 7A, or the like, thereby increasing the flow resistance and promoting the mixing.

Note that when the flow resistance of coating material 7A by flow resistance increase portion 25 is excessively increased, since fluidity of the product portion to cavity 12 is deteriorated, it may be necessary to adjust a balance between the two. That is, in the case of a shape having an excessively high flow resistance (in other words, a high pressure loss), problems such as unfilling in cavity 12 or residual bubbles due to increased viscosity will occur, and flow design using, for example, flow analysis of the reactive coating material or the like is required so as not to cause these problems. For example, as a result of using the flow analysis or the like, it is conceivable to design the shape and arrangement of flow resistance increase portion 25 so as to be within a filling time of several seconds or about 5 seconds in the case of a commercially available isocyanate coating material.

### (Third exemplary embodiment)

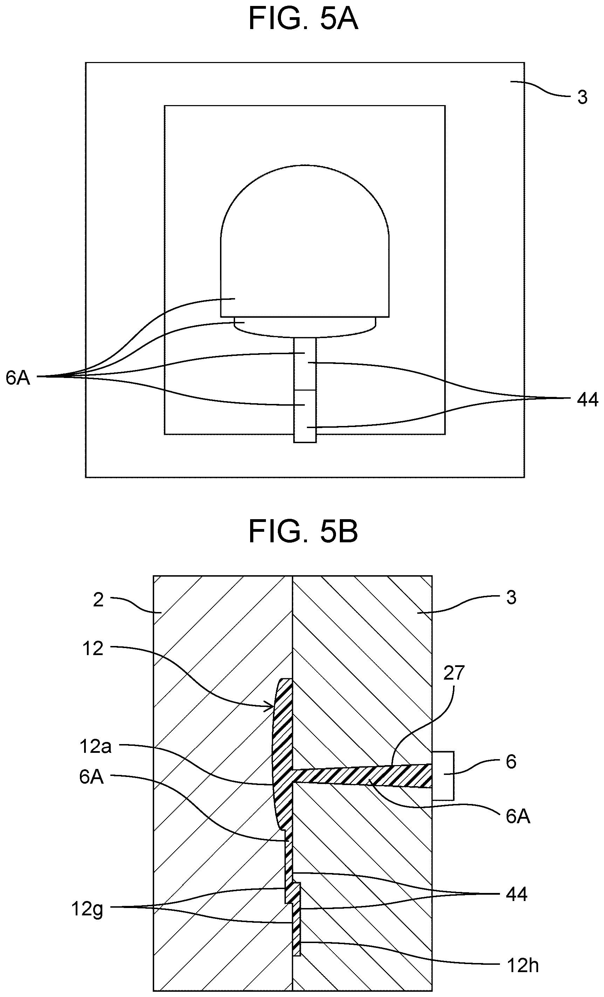

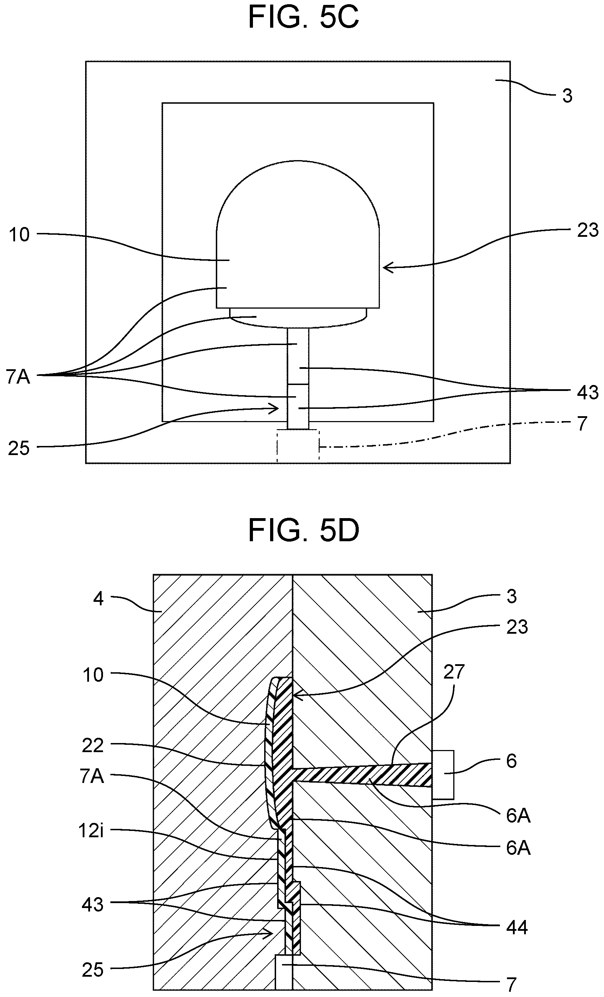

Figs. 5A to 5D show an example of the mold used in the method for manufacturing the in-mold coated component according to the third exemplary embodiment of the present invention. Figs. 5A and 5C are plan views of the mold, showing a resin molding step and an in-mold coating step of the method for manufacturing the in-mold coated component, and Figs. 5B and 5D are sectional views of the mold, showing the resin molding step and the in-mold coating step of the method for manufacturing the in-mold coated component. In Figs. 5A to 5D, the same components as those in Figs. 1A to 4C are denoted by the same reference marks, and description thereof will be omitted. In the method for manufacturing the in-mold coated component and the mold, a molded component imaging the home electrical appliance housing cover or the like is shown as an example of in-mold coated component 23.

The third exemplary embodiment is different from the first and second exemplary embodiments in that mixing flow path 43 is not configured to expand planarly in the lateral direction as in the first and second exemplary embodiments, but three-dimensional mixing flow path 43 is configured to expand three-dimensionally in the up and down direction by stacking and shifting a plurality of elongated rectangular flow paths in a stepped manner. More specifically, both three-dimensional mixing flow path 43 and three-dimensional mixing flow path portion 44 are formed as coating material injection flow path 24 in the middle of flowing of coating material 7A into coating film cavity 22 of the product portion.

Three-dimensional mixing flow path portion 44 is formed of resin 6A using cavity 12h of a mating surface of second mold 3 and cavity 12g of a mating surface of first mold 2 as a bottom surface or the side walls of coating material injection flow path 24, and is formed by partially stacking elongated rectangular plate members in a stepped manner in a longitudinal direction thereof.

Three-dimensional mixing flow path 43 is constituted by three-dimensional mixing flow path portion 44 made of resin and cavity 12i of a mating surface of third mold 4, and is formed by partially overlapping and connecting the elongated rectangular flow paths in a stepped manner in the longitudinal direction. Three-dimensional mixing flow path 43 in which the flow paths are stacked stepwise in this manner corresponds to flow resistance increase portion 25 in (b) of Fig. 4A.

According to such a configuration, when coating material 7A flowing in from coating material supply unit 7 passes through three-dimensional mixing flow path 43 functioning as flow resistance increase portion 25, coating material 7A can reach coating film cavity 22 of the product portion in a state where the mixing effect is promoted by the flow path shape or the flow resistance formed by three-dimensional mixing flow path portion 44 made of resin 6A. Even when the mixing properties in the injector are not good, since three-dimensional mixing flow path 43 and three-dimensional mixing flow path portion 44 function as flow resistance increase portion 25, the mixing of reactive coating material 7A of two or more liquids is promoted in mold 1, and it is possible to provide in-mold coated component 23 having coating film 10 without the color unevenness and the mixing unevenness or with suppressed color unevenness and mixing unevenness. It is desirable that three-dimensional mixing flow path 43 and three-dimensional mixing flow path portion 44 are removed by cutting or the like, or are provided at the portion that is not the product appearance surface, when the molding of in-mold coated component 23 is completed.

### (Fourth exemplary embodiment)

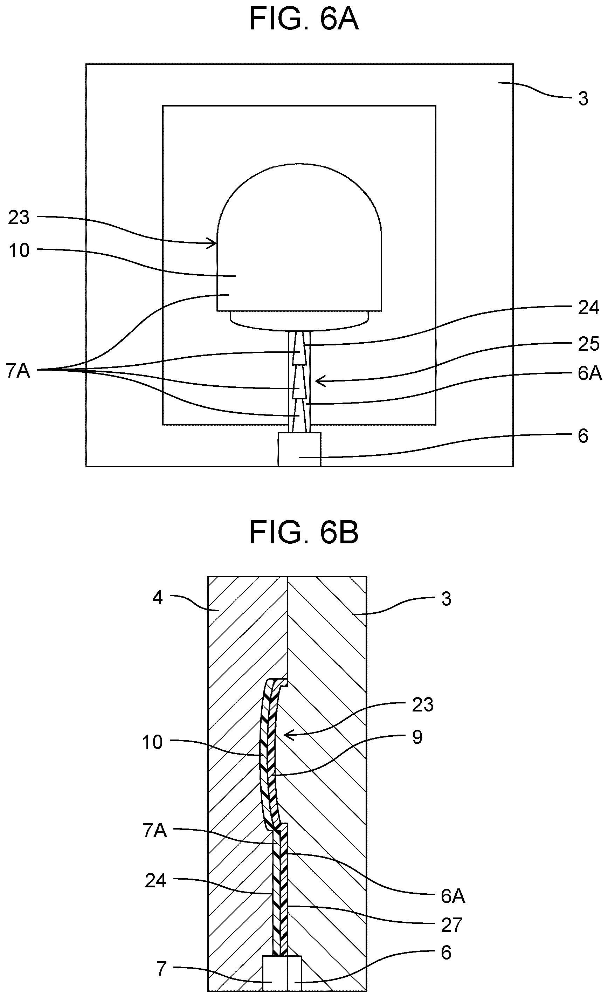

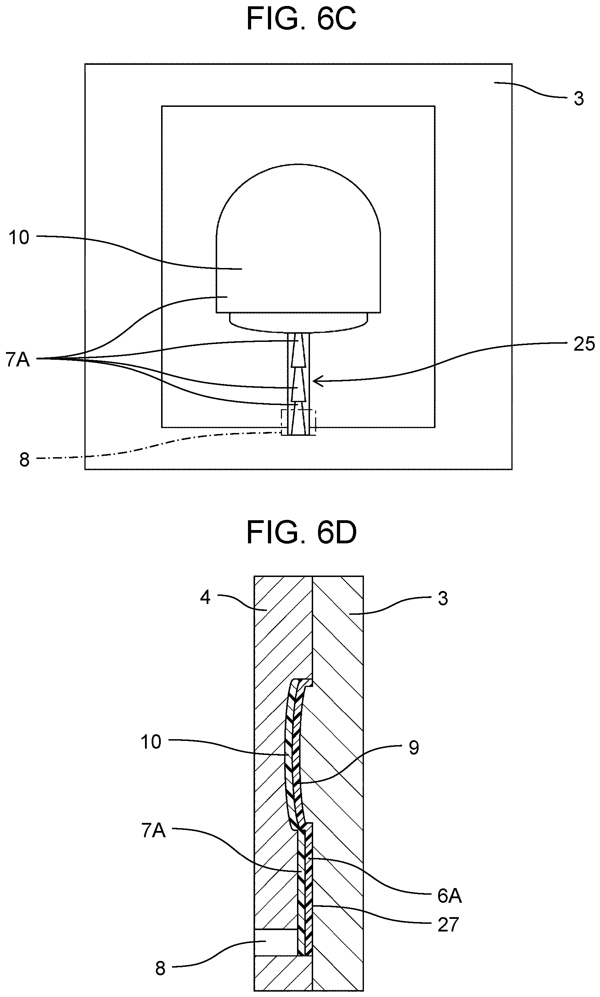

Figs. 6A to 6D show an example of the mold used in the method for manufacturing the in-mold coated component according to the fourth exemplary embodiment of the present invention. Figs. 6A and 6C are plan views of the mold, showing the resin molding step and the in-mold coating step of the method for manufacturing the in-mold coated component, and Figs. 6B and 6D are sectional views of the mold, showing the molding step and the in-mold coating step of the method for manufacturing the in-mold coated component. In Figs. 6A to 6D, the same component as those in Figs. 1A to 5D are denoted by the same reference marks, and description thereof will be omitted. In the method for manufacturing the in-mold coated component and the mold, a molded component imaging the home electrical appliance housing cover or the like is shown as an example of the in-mold coated component.

The fourth exemplary embodiment is different from the first exemplary embodiment, the second exemplary embodiment, and the third exemplary embodiment in that resin molded body 9 is molded in a step different from a coating material injection (the in-mold coating) step.

That is, in the case of Figs. 6A and 6B, in the resin molding step, first mold 2 having cavity 12 of resin molded body 9 and second mold 3 having resin supply unit 6 disposed along coating material injection flow path 24 are combined to perform resin molding of resin molded body 9. Here, regardless of an operation of the in-mold coating step as a next step, the resin molding is performed one after another, and second mold 3 holding resin molded body 9 is sent to the in-mold coating step.

In the in-mold coating step different from the resin molding step, second mold 3 holding resin molded body 9 and third mold 4 having coating film cavity 22 are combined, and then the mold is clamped by a press machine (not shown) or the like, and coating material 7A is injected from coating material supply unit 7 to form coating film 10.

As described above, by separately and independently performing the resin molding step and the in-mold coating step, the degree of freedom in production can be improved.

In addition, the in-mold coating step can be independently designed separately from the resin molding step, and for example, a configuration in which coating material 7A is injected from a product vertical surface (that is, from a direction orthogonal to the flow direction of coating material injection flow path 24) as coating material supply unit 8 instead of coating material supply unit 7 as in the case of coating material supply unit 8 in Figs. 6C and 6D can also be used.

Note that by appropriately combining arbitrary exemplary embodiments or modifications among the various exemplary embodiments or modifications described above, effects of the respective exemplary embodiments or modifications can be obtained. In addition, combinations of the exemplary embodiments, combinations of the examples, or combinations of the exemplary embodiments and the examples can be used, and combinations of features in different exemplary embodiments or examples can also be used.

### (Supplementary note)

The above description of the exemplary embodiments discloses the following techniques.

(Technique 1) A method for manufacturing an in-mold coated component, the method including: injecting a reactive coating material of two or more liquids into a coating film cavity formed between a surface of a mold and a surface of a resin molded body via a coating material injection flow path in an in-mold coated component mold; and then curing the coating material in the mold to manufacture an in-mold coated component having a coating film formed on the surface of the resin molded body, in which the coating material is mixed by increasing flow resistance by a flow resistance increase portion provided in the coating material injection flow path at the time of injecting the coating material.

Note that in the in-mold coated component mold, the reactive coating material of two or more liquids may be injected into the coating film cavity adjacent to the surface of the resin molded body via the coating material injection flow path. In addition, the coating material may be cured in the mold, to tightly integrate the coating film with the surface of the resin molded body to form the in-mold coated component.

(Technique 2) The method according to technique 1, in which the flow resistance increase portion is configured by connecting a plurality of tapered flow paths, a flow path sectional area in a direction intersecting an injection direction of the coating material gradually decreasing and then increasing as it proceeds in the injection direction of the coating material, and at the time of injecting the coating material, the flow resistance increase portion increases the flow resistance of the coating material by the plurality of tapered flow paths and mixes the coating material.

(Technique 3) The method according to technique 1, in which the flow resistance increase portion is configured by a meandering flow path meandering with respect to an injection direction of the coating material, and at the time of injecting the coating material, the flow resistance increase portion increases the flow resistance of the coating material by meandering the coating material by the meandering flow path and mixes the coating material.

(Technique 4) The method according to technique 1, in which the flow resistance increase portion includes a plurality of baffle plate portions extending in a direction intersecting an injection direction of the coating material, and at the time of injecting the coating material, the flow resistance increase portion increases the flow resistance of the coating material by the plurality of baffle plate portions and mixes the coating material.

(Technique 5) The method according to any one of techniques 1 to 4, in which the coating material is a reactive mixed type coating material of two or more liquids of a polyol and an isocyanate.

(Technique 6) The method according to any one of techniques 1 to 5, including forming the coating material injection flow path having the flow resistance increase portion at the time of resin molding of the resin molded body before injection of the coating material.

(Technique 7) An in-mold coated component mold for manufacturing an in-mold coated component having a coating film formed on a surface of a resin molded body by injecting a reactive coating material of two or more liquids into a coating film cavity adjacent to the surface of the resin molded body via a coating material injection flow path and then curing the coating material, the in-mold coated component mold including, in the coating material injection flow path, a flow resistance increase portion that comes into contact with the coating material in a direction intersecting an injection direction of the coating material at the time of injecting the coating material to increase flow resistance of the coating material and mix the coating material.

Note that the reactive coating material of two or more liquids may be injected into the coating film cavity adjacent to the surface of the resin molded body via the coating material injection flow path. In addition, the coating material may be cured to tightly integrate the coating film with the surface of the resin molded body to form the in-mold coated component.

(Technique 8) The in-mold coated component mold according to technique 7, in which the flow resistance increase portion is configured by connecting a plurality of tapered flow paths, a flow path sectional area in a direction intersecting an injection direction of the coating material gradually decreasing and then increasing as it proceeds in the injection direction of the coating material, and at the time of injecting the coating material, the flow resistance increase portion increases the flow resistance of the coating material by the plurality of tapered flow paths and mixes the coating material.

(Technique 9) The in-mold coated component mold according to technique 7, in which the flow resistance increase portion is configured by a meandering flow path meandering with respect to an injection direction of the coating material, and at the time of injecting the coating material, the flow resistance increase portion increases the flow resistance of the coating material by meandering the coating material by the meandering flow path and mixes the coating material.

(Technique 10) The in-mold coated component mold according to technique 7, in which the flow resistance increase portion includes a plurality of baffle plate portions extending in a direction intersecting an injection direction of the coating material, and at the time of injecting the coating material, the flow resistance increase portion increases the flow resistance of the coating material by the plurality of baffle plate portions and mixes the coating material.

(Technique 11) The in-mold coated component mold according to any one of techniques 7 to 10, in which the coating material is a reactive mixed type coating material of two or more liquids of a polyol and an isocyanate.

(Technique 12) The in-mold coated component mold according to any one of techniques 7 to 11, including a cavity that forms the coating material injection flow path having the flow resistance increase portion at the time of resin molding of the resin molded body before injection of the coating material.

With this configuration, it is possible to provide an in-mold coated component in which the color unevenness and the mixing unevenness are suppressed even when a small volume of the coating material is used, when injecting the reactive coating material of two or more liquids into the coating film cavity formed between the surface of the mold and the surface of the resin molded body via the coating material injection flow path in the in-mold coated component mold, and then curing the coating material in the mold to manufacture the in-mold coated component having the coating film formed on the surface of the resin molded body.

In addition, it is possible to provide the in-mold coated component in which the color unevenness and the mixing unevenness are suppressed even when a small volume of the coating material is used, when injecting the reactive coating material of two or more liquids into the coating film cavity adjacent to the surface of the resin molded body via the coating material injection flow path in the in-mold coated component mold, and then curing the coating material in the mold, to manufacture the in-mold coated component formed by tightly integrating the coating film with the surface of the resin molded body.

### INDUSTRIAL APPLICABILITY

In the method for manufacturing the in-mold coated component and the mold according to the above aspects of the present invention, a reactive coating material such as a mixed type polyurethane coating material of two or more liquids such as a polyol and an isocyanate is used, and in order to apply surface coating to the resin molded body in the mold to impart functionalities such as decoration, hard coating, or antibacterial properties, the coating film is molded by injecting the coating material into the mold. In such a method for manufacturing the in-mold coated component and the mold, it is possible to provide the in-mold coated component in which the color unevenness and the mixing unevenness are suppressed for a small volume product by providing a coating material mixing zone in a coating material injection path to compensate for insufficient mixing by the coating material injector.

### REFERENCE MARKS IN THE DRAWINGS

1: in-mold coated component mold
2: first mold
3: second mold
4: third mold
6: resin supply unit
6A: resin
7: coating material supply unit
7A: reactive coating material
8: three-dimensional coating material supply unit
9: resin molded body
10: coating film
11: edge portion
12: resin molded body cavity
12a to 12d: cavity
22: coating film cavity
23: in-mold coated component
24: coating material injection flow path
24a: side wall
24d,24e,24f: flow path that meanders
25: flow resistance increase portion
25a: area change portion
26: injection direction of coating material
27: resin injection flow path
28: resin molding mold
41: mixing flow path
42: mixed shape molded body
43: three-dimensional mixing flow path
44: three-dimensional mixed shape molded body
113: auxiliary cavity
121: coating surface
131: recess
191: main body
192: undercut portion
193: auxiliary molded body
196: surface to be coated
b: baffle plate portion
f1: flow start direction
f2 to f8: flow direction
j: baffle plate portion
r1 to r6: rectangular flow path
t: triangular flow path

## Claims

1. A method for manufacturing an in-mold coated component, the method comprising:
injecting a reactive coating material of two or more liquids into a coating film cavity formed between a surface of a mold and a surface of a resin molded body via a coating material injection flow path in an in-mold coated component mold; and then
curing the coating material in the mold to manufacture an in-mold coated component having a coating film formed on the surface of the resin molded body, wherein
the coating material is mixed by increasing flow resistance by a flow resistance increase portion provided in the coating material injection flow path at the time of injecting the coating material.

2. The method according to claim 1, wherein
the flow resistance increase portion is configured by connecting a plurality of tapered flow paths, a flow path sectional area in a direction intersecting an injection direction of the coating material gradually decreasing and then increasing as it proceeds in the injection direction of the coating material, and
at the time of injecting the coating material, the flow resistance increase portion increases the flow resistance of the coating material by the plurality of tapered flow paths and mixes the coating material.

3. The method according to claim 1, wherein
the flow resistance increase portion is configured by a meandering flow path meandering with respect to an injection direction of the coating material, and
at the time of injecting the coating material, the flow resistance increase portion increases the flow resistance of the coating material by meandering the coating material by the meandering flow path and mixes the coating material.

4. The method according to claim 1, wherein
the flow resistance increase portion includes a plurality of baffle plate portions extending in a direction intersecting an injection direction of the coating material, and
at the time of injecting the coating material, the flow resistance increase portion increases the flow resistance of the coating material by the plurality of baffle plate portions and mixes the coating material.

5. The method according to any one of claims 1 to 4, wherein the coating material is a reactive mixed type coating material of two or more liquids of a polyol and an isocyanate.

6. The method according to any one of claims 1 to 4, comprising forming the coating material injection flow path having the flow resistance increase portion at the time of resin molding of the resin molded body before injection of the coating material.

7. An in-mold coated component mold for manufacturing an in-mold coated component having a coating film formed on a surface of a resin molded body by injecting a reactive coating material of two or more liquids into a coating film cavity adjacent to the surface of the resin molded body via a coating material injection flow path and then curing the coating material, the in-mold coated component mold comprising, in the coating material injection flow path, a flow resistance increase portion that comes into contact with the coating material in a direction intersecting an injection direction of the coating material at the time of injecting the coating material to increase flow resistance of the coating material and mix the coating material.

8. The in-mold coated component mold according to claim 7, wherein
the flow resistance increase portion is configured by connecting a plurality of tapered flow paths, a flow path sectional area in a direction intersecting an injection direction of the coating material gradually decreasing and then increasing as it proceeds in the injection direction of the coating material, and
at the time of injecting the coating material, the flow resistance increase portion increases the flow resistance of the coating material by the plurality of tapered flow paths and mixes the coating material.

9. The in-mold coated component mold according to claim 7, wherein
the flow resistance increase portion is configured by a meandering flow path meandering with respect to an injection direction of the coating material, and
at the time of injecting the coating material, the flow resistance increase portion increases the flow resistance of the coating material by meandering the coating material by the meandering flow path and mixes the coating material.

10. The in-mold coated component mold according to claim 7, wherein
the flow resistance increase portion includes a plurality of baffle plate portions extending in a direction intersecting an injection direction of the coating material, and
at the time of injecting the coating material, the flow resistance increase portion increases the flow resistance of the coating material by the plurality of baffle plate portions and mixes the coating material.

11. The in-mold coated component mold according to any one of claims 7 to 10, wherein the coating material is a reactive mixed type coating material of two or more liquids of a polyol and an isocyanate.

12. The in-mold coated component mold according to any one of claims 7 to 10, comprising a cavity that forms the coating material injection flow path having the flow resistance increase portion at the time of resin molding of the resin molded body before injection of the coating material.
